# FASCICULE DE BREVET EUROPEEN

(11) **EP 3 283 315 B1**
(45) Date de publication et mention de la délivrance du brevet: **01.05.2019**
(21) Numéro de dépôt: 16713547.4
(22) Date de dépôt: 14.03.2016
(51) Int. Cl.: B60K 6/48, B60K 6/52, B60K 17/356, B60W 20/50, B60W 50/035, B60W 10/06, B60W 10/08, B60W 10/115, B60W 30/18

(54) **PROCÉDÉ DE GESTION D'UN VÉHICULE HYBRIDE AVEC BOÎTE DE VITESSES AUTOMATIQUE EN CAS DE DÉFAILLANCE DE CETTE BOÎTE**
VERFAHREN ZUR VERWALTUNG EINES HYBRIDFAHRZEUGS MIT EINEM AUTOMATIKGETRIEBE BEI AUSFALL DIESES GETRIEBES
METHOD FOR THE MANAGEMENT OF A HYBRID VEHICLE WITH AUTOMATIC GEARBOX IN THE EVENT OF FAILURE OF THIS GEARBOX

(30) Priorité: 13.04.2015 FR 1553170
(43) Date de publication de la demande: 21.02.2018
(73) Titulaire: PSA AUTOMOBILES S.A., 78300 Poissy (FR)
(72) Inventeur: SERDJANIAN, Gregor, 75020 Paris (FR); ROCQ, Gaetan, 78125 La Boissiere Ecole (FR); BARDET, Arnaud, 78150 Le Chesnay (FR); RAKOTONIRINA, Eddy, 78500 Sartrouville (FR)
(74) Mandataire: Fernandez, Francis Lionel
(86) Numéro de dépôt international: PCT/FR2016/050561
(87) Numéro de publication internationale: WO 2016/166433

(56) Documents cités:
- EP-A1- 2 634 055
- US-A- 5 790 969
- US-A1- 2004 180 754

## Description

La présente invention concerne un procédé de gestion de la chaîne de traction d'un véhicule automobile hybride équipé d'une boîte de vitesses automatique, ainsi qu'un véhicule automobile comportant des moyens mettant en oeuvre un tel procédé de gestion.

Un type de véhicule automobile hybride connu comporte un moteur thermique constituant la motorisation principale, qui entraîne les roues motrices par une boîte de vitesses automatique, et une motorisation auxiliaire reliée à un moyen de stockage de l'énergie, qui peut fonctionner en moteur en délivrant un couple additionnel aux roues, ou en génératrice en rechargeant le moyen de stockage de l'énergie.

L'énergie auxiliaire peut être notamment une énergie électrique stockée dans des batteries, ou une pression hydraulique stockée dans des accumulateurs de pression.

Ces véhicules hybrides présentent plusieurs modes de fonctionnement, comprenant en particulier un mode de traction par le moteur thermique seul, un mode zéro émission appelé « ZEV » comportant une traction uniquement avec la motorisation auxiliaire, un mode combiné appelé « Boost » comportant une traction avec les deux motorisations pour disposer d'une puissance maximale, et un mode freinage freinant le véhicule avec une récupération d'énergie rechargeant la réserve d'énergie auxiliaire.

Les moyens de stockage de l'énergie auxiliaire contiennent généralement une quantité d'énergie réduite, afin de présenter un encombrement et une masse acceptables permettant de les installer dans les véhicules automobiles de tourisme. La motorisation auxiliaire présente alors des capacités de fourniture de couple à partir du moyen de stockage d'énergie auxiliaire, qui sont limitées en puissance et en durée.

Les boîtes de vitesses automatiques généralement développées pour les véhicules automobiles conventionnels sans hybridation, comportent un calculateur électronique propre capable de gérer entièrement en « mode automatique » la sélection des rapports de vitesse ainsi que leurs passages, en liaison avec la demande du conducteur et les paramètres de fonctionnement du véhicule.

Un type de boîte de vitesses automatique couramment utilisé, comporte des trains planétaires commandés par différents éléments de friction comprenant des freins et embrayages, actionnés par un fluide maintenu sous pression, en passant par des électrovannes de pilotage.

Ces boîtes de vitesses automatiques présentent un état appelé « neutre hydraulique » avec le levier de commande mis dans la position neutre, qui fait chuter la pression hydraulique afin de n'engager aucun élément de friction, et un état appelé « neutre électrique » qui maintient une pression hydraulique tout en commandant les électrovannes pour obtenir une chaîne cinématique ne transmettant pas de couple.

Le calculateur de la boîte de vitesses automatique comporte généralement un « mode de secours » appelé aussi « Emergency Mode » (EM), qui en cas de défaillance de son système empêchant des passages de rapports, par exemple avec un court-circuit sur une électrovanne de commande du fluide, reconfigure de manière autonome la boîte de vitesses pour passer dans un état sûr comprenant l'engagement d'un unique rapport choisi parmi ceux que le système est capable d'engager.

Pour cela on utilise si possible le troisième rapport, qui réalise un compromis entre le couple et la vitesse délivrée sur les roues motrices. La prestation est dégradée, mais le véhicule peut quand même terminer un trajet. Dans ce cas un voyant d'indication de la panne s'affiche au tableau de bord.

Pour une application dans les véhicules hybrides, le mode automatique de ce type de boîte de vitesses peut être géré par un calculateur de coordination de la chaîne de traction, prenant en compte l'ensemble des paramètres de fonctionnement de cette chaîne, comprenant en particulier ceux de la motorisation auxiliaire comme le niveau de charge du moyen de stockage d'énergie, pour sélectionner les rapports de transmission à engager.

La boîte de vitesses automatique reçoit alors la consigne de rapport et effectue avec les logiciels de son calculateur propre les changements demandés, en réalisant ainsi une meilleure répartition de couple venant de chaque motorisation pour répondre à la demande du conducteur tout en réduisant la consommation d'énergie.

Les documents US 2004/180754 A1, EP 2 634 055 A1 et US 5 790 969 A divulguent des procédés de gestion d'un véhicule (hybride ou conventionnel) comportant une boîte de vitesses automatique en cas de défaillance de celle-ci, ainsi que les véhicules correspondants.

De plus dans le cas d'un moteur thermique entraînant les roues avant du véhicule et d'une motorisation auxiliaire entraînant les roues arrière, le calculateur de coordination répartit le couple entre ces deux essieux afin d'obtenir les meilleures performances ainsi qu'une bonne sécurité.

Pour ce type d'architecture un passage de la boîte de vitesses automatique en mode de secours suite à une défaillance interne, peut poser des problèmes de sécurité en engageant de manière autonome un rapport de la transmission non demandé par le calculateur de coordination, alors que la chaîne de traction est dans un état qui va permettre le déplacement du véhicule avec cet engagement. On peut avoir en particulier une avance lente formant un mode de marche rampante, avec le véhicule entraîné par le moteur thermique tournant à une faible vitesse.

On a alors un mouvement du véhicule inattendu, qui est une défaillance grave pouvant causer des accidents, notamment des collisions avec des personnes.

La présente invention a notamment pour but de résoudre ces problèmes de l'art antérieur.

Elle propose à cet effet un procédé de gestion de la chaîne de traction d'un véhicule automobile hybride comportant un moteur thermique entraînant les roues motrices par une boîte de vitesses automatique disposant d'un calculateur propre de gestion, présentant un mode de secours engageant de manière autonome en cas de défaillance de la boîte un rapport de vitesse, cette chaîne de traction comportant de plus une motorisation auxiliaire reliée à un moyen de stockage d'énergie, et un calculateur de coordination de l'ensemble de la chaîne de traction qui détermine dans un mode de fonctionnement normal le choix des rapports de vitesse, ce procédé effectuant en cas de défaillance de la boîte de vitesses, une reconfiguration du calculateur de coordination commandant systématiquement l'arrêt du moteur thermique si la vitesse du véhicule est inférieure à un seuil maximum, et si la boîte de vitesses est dans un état de neutre électrique comprenant une commande électrique de ses éléments de friction donnant une chaîne cinématique ouverte en maintenant une génération de pression hydraulique destinée à la commande de ces éléments.

Un avantage de ce procédé de gestion est que l'on assure la sécurité du véhicule en évitant son déplacement indésirable, en arrêtant systématiquement le moteur thermique dans les cas où il y a un risque de déplacement avec ce moteur tournant, même au ralenti, qui pourrait alors entraîner le véhicule par le rapport de vitesse du mode de secours engagé de manière autonome par la boîte de vitesses, sans le contrôle du calculateur de coordination.

Le procédé de gestion de la chaîne de traction selon l'invention peut de plus comporter une ou plusieurs des caractéristiques suivantes, qui peuvent être combinées entre elles.

Avantageusement, en cas de défaillance de la boîte de vitesses son calculateur de gestion émet un flux de communication destiné au calculateur de coordination, indiquant cette défaillance.

En particulier, le flux de communication émis par le calculateur de gestion, peut être un flux binaire.

Avantageusement, l'état de neutre électrique de la boîte de vitesses est défini par un flux d'informations émis par le calculateur de coordination et destiné au calculateur de gestion de la boîte de vitesses, ou par une information venant de ce calculateur de gestion de la boîte de vitesses indiquant son état de neutre électrique, destinée au calculateur de coordination.

Avantageusement si la vitesse du véhicule est supérieure au seuil maximum, ou si la boîte de vitesses n'est pas dans l'état de neutre électrique, alors le calculateur de coordination applique une demande de traction autorisant le maintien du fonctionnement du moteur thermique ou son démarrage.

L'invention a aussi pour objet un véhicule automobile hybride comportant un moteur thermique entraînant les roues motrices par une boîte de vitesses automatique disposant d'un calculateur propre de gestion, présentant un mode de secours engageant de manière autonome en cas de défaillance de la boîte un rapport de vitesse, cette chaîne de traction comportant de plus une motorisation auxiliaire reliée à un moyen de stockage d'énergie, et un calculateur de coordination de l'ensemble de la chaîne de traction qui détermine dans un mode de fonctionnement normal le choix des rapports de vitesse, ce véhicule comportant des moyens mettant en oeuvre un procédé de gestion de la chaîne de traction comprenant l'une quelconque des caractéristiques précédentes.

En particulier la motorisation auxiliaire peut comporter une machine électrique entraînant les roues arrière du véhicule.

En particulier le calculateur propre de gestion peut comporter des moyens engageant en cas de défaillance de la boîte de vitesses, le troisième rapport de cette boîte.

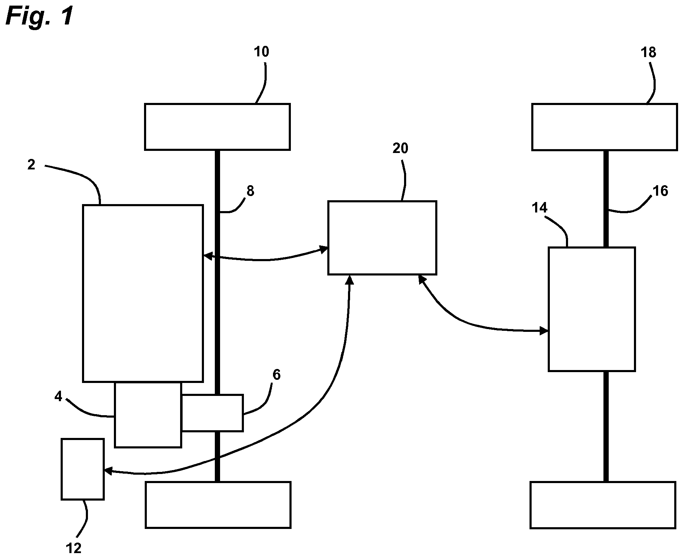

L'invention sera mieux comprise et d'autres caractéristiques et avantages apparaîtront plus clairement à la lecture de la description ci-après, donnée à titre d'exemple et de manière non limitative, en référence au dessin annexé de la figure 1 présentant un schéma d'un véhicule hybride électrique mettant en oeuvre un procédé de gestion de la chaîne de traction selon l'invention.

La figure 1 présente un moteur thermique 2 relié à une boîte de vitesses automatique 4 comportant un différentiel de sortie 6, qui entraîne de chaque côté une roue motrice avant 10 par un arbre de roue 8.

La boîte de vitesses automatique 4 comporte des trains planétaires commandés par des embrayages et des freins actionnés par une pression hydraulique, afin de réaliser différentes combinaisons donnant plusieurs rapports de marche avant et un rapport de marche arrière.

La pression hydraulique est délivrée aux embrayages et aux freins par des électrovannes de commande, pilotées par un calculateur électronique propre de gestion de la boîte de vitesses automatique 12.

La boîte de vitesses automatique 4 comporte un état neutre hydraulique, qui fait chuter la pression hydraulique quand le conducteur met le levier de commande dans la position « neutre ». Tant que le levier est dans cette position, en l'absence de pression hydraulique aucun rapport de la boîte de vitesses ne peut s'engager, même en cas de défaillance électrique qui ouvrirait des électrovannes.

Quand le levier de commande est dans une position de marche avant ou arrière, la pression hydraulique est établie dans la boîte de vitesses, mais cette transmission peut être dans un état de neutre électrique dans lequel la commande des freins et des embrayages est telle que la boîte de vitesses est ouverte, ne transmettant aucun couple.

Le train arrière comporte une motorisation auxiliaire comprenant une machine électrique centrale 14 entraînant de chaque côté une roue arrière 18 par un arbre de roue 16, qui est reliée à des batteries non représentées de manière à travailler en moteur en prélevant une énergie sur ces batteries, ou en génératrice en produisant un courant de recharge des batteries à partir du freinage du véhicule.

Un calculateur de coordination 20 reçoit des informations sur la demande du conducteur, en particulier la position de la pédale d'accélérateur et du levier de commande de la transmission, ainsi que sur le fonctionnement du véhicule, en particulier venant du moteur thermique 2, de la boîte de vitesses automatique 4 et de la machine électrique 14 avec ses batteries, pour optimiser le fonctionnement des différentes motorisations.

En particulier le calculateur de coordination 20 sélectionne le rapport de vitesse à engager par la boîte de vitesses automatique 4 en fonction des demandes du conducteur, et en optimisant le fonctionnement des deux motorisations pour obtenir le meilleur rendement, puis transmet cette consigne au calculateur de gestion 12 de cette boîte qui réalise lui-même le changement de rapport.

Le calculateur de coordination 20 peut envoyer au calculateur de gestion 12 une consigne de neutre électrique pour la boîte de vitesses 4. En complément la boîte de vitesses 4 peut donner une information sur son état de neutre électrique, destinée au calculateur de coordination 20.

En cas de défaillance de la boîte de vitesses automatique 4, son calculateur de gestion 12 peut commander de manière autonome un mode secours EM indépendamment des consignes venant du calculateur de coordination 20, qui engage un rapport de la transmission permettant un certain roulage du véhicule. On utilise notamment un rapport intermédiaire de la boîte de vitesses 4, en particulier le troisième rapport.

Lors d'une défaillance d'un composant de la boîte de vitesses automatique 4, le procédé selon l'invention comporte une étape où le calculateur de gestion 12 avertit le calculateur de coordination 20 de son nouvel état par un flux de communication, qui peut être binaire pour obtenir un message simple.

En particulier ce flux peut être appelé : « ETAT_MD_BV », pour état mode dégradé boîte de vitesses.

Dans ce cas on a alors ETAT_MD_BV = Vrai.

Grâce à ce flux le calculateur de coordination 20 est informé du nouvel état de la boîte de vitesses 4, et réalise aussitôt une reconfiguration.

Par ailleurs la motorisation auxiliaire 14 avec ses batteries comportant une quantité d'énergie limitée, ne permettant pas un roulage prolongé avec cette unique énergie, et délivrant un couple assez faible, il convient de maintenir le fonctionnement du moteur thermique 2.

Le calculateur de coordination 20 va alors appliquer la reconfiguration comportant une demande prioritaire de génération de couple sur le train avant, comprenant le démarrage du moteur thermique 2 si celui est arrêté, et l'inhibition de ses arrêts. En particulier cette reconfiguration peut s'appeler « Demande traction thermique ».

De cette manière le moteur thermique 2 peut délivrer un couple complémentaire s'ajoutant à celui délivré par la motorisation auxiliaire 14, en utilisant le rapport intermédiaire de la boîte de vitesses 4 imposé par le mode secours EM.

Toutefois avant le démarrage du moteur thermique 2, le procédé fait une vérification sur la vitesse du véhicule qui doit être nulle ou très basse, inférieure à un seuil, et sur l'état de la boîte de vitesses 4 qui doit être au neutre électrique, pour déterminer si ces deux conditions sont réunies un risque d'incident par un entraînement du véhicule.

En particulier le flux de demande de neutre électrique à la boîte de vitesses 4, peut s'appeler « DDE_DECLU ».

En effet dans ce cas l'engagement de manière autonome par le calculateur de gestion 12 du rapport du mode de secours EM, permis par la pression hydraulique maintenue dans l'état de neutre électrique, conduirait à l'entraînement du véhicule par le moteur thermique 2 alors que le calculateur de coordination 20 ne l'a pas décidé.

En particulier avec le moteur thermique 2 tournant au ralenti, on obtient alors le mode de marche rampante qui peut même à faible vitesse percuter un piéton ou causer d'autres accidents.

Le procédé vérifie dans la reconfiguration après avoir reçu le flux ETAT_MD_BV = Vrai, les conditions suivantes :
VITESSE_VEHICULE < seuil ; et
DDE_DECLU = Vrai.

Si elles sont réalisées, alors le calculateur de coordination 20 demande une « Coupure du moteur thermique », arrêtant aussitôt ce moteur thermique ou n'autorisant pas son démarrage.

Dans tous les autres cas le calculateur de coordination 20 applique une « Demande de traction », autorisant le maintien du fonctionnement du moteur thermique 2 ou son démarrage.

On obtient alors de manière simple et économique, avec seulement des compléments de logiciel appliqués dans les calculateurs existants, une sécurité du conducteur du véhicule ainsi que des personnes environnantes par l'impossibilité de déplacement imprévu de ce véhicule.

## Revendications

1. Procédé de gestion de la chaîne de traction d'un véhicule automobile hybride comportant un moteur thermique (2) entraînant les roues motrices (10) par une boîte de vitesses automatique (4) disposant d'un calculateur propre de gestion (12), présentant un mode de secours engageant de manière autonome en cas de défaillance de la boîte un rapport de vitesse, cette chaîne de traction comportant de plus une motorisation auxiliaire (14) reliée à un moyen de stockage d'énergie, et un calculateur de coordination (20) de l'ensemble de la chaîne de traction qui détermine dans un mode de fonctionnement normal le choix des rapports de vitesse, **caractérisé en ce qu'**en cas de défaillance de la boîte de vitesses (4), il effectue une reconfiguration du calculateur de coordination (20) commandant systématiquement l'arrêt du moteur thermique (2) si la vitesse du véhicule est inférieure à un seuil maximum, et si la boîte de vitesses est dans un état de neutre électrique comprenant une commande électrique de ses éléments de friction donnant une chaîne cinématique ouverte en maintenant une génération de pression hydraulique destinée à la commande de ces éléments.

2. Procédé de gestion selon la revendication 1, **caractérisé en ce qu'**en cas de défaillance de la boîte de vitesses (4), son calculateur de gestion (12) émet un flux de communication destiné au calculateur de coordination (20), indiquant cette défaillance.

3. Procédé de gestion selon la revendication 2, **caractérisé en ce que** le flux de communication émis par le calculateur de gestion (12), est un flux binaire.

4. Procédé de gestion selon l'une quelconque des revendications précédentes, **caractérisé en ce que** l'état de neutre électrique de la boîte de vitesses (4) est défini par un flux d'informations émis par le calculateur de coordination (20) et destiné au calculateur de gestion de la boîte de vitesses (12), ou par une information venant de ce calculateur de gestion de la boîte de vitesses (12) indiquant son état de neutre électrique, destinée au calculateur de coordination (20).

5. Procédé de gestion selon l'une quelconque des revendications précédentes, **caractérisé en ce que** si la vitesse du véhicule est supérieure au seuil maximum, ou si la boîte de vitesses n'est pas dans l'état de neutre électrique, alors le calculateur de coordination (20) applique une demande de traction autorisant le maintien du fonctionnement du moteur thermique (2) ou son démarrage.

6. Véhicule automobile hybride comportant un moteur thermique (2) entraînant les roues motrices (10) par une boîte de vitesses automatique (4) disposant d'un calculateur propre de gestion (12), présentant un mode de secours engageant de manière autonome en cas de défaillance de la boîte un rapport de vitesse, cette chaîne de traction comportant de plus une motorisation auxiliaire (14) reliée à un moyen de stockage d'énergie, et un calculateur de coordination (20) de l'ensemble de la chaîne de traction qui détermine dans un mode de fonctionnement normal le choix des rapports de vitesse, **caractérisé en ce qu'**il comporte des moyens mettant en oeuvre un procédé de gestion de la chaîne de traction réalisé suivant l'une quelconque des revendications précédentes.

7. Véhicule automobile hybride selon la revendication 6, **caractérisé en ce que** la motorisation auxiliaire (14) comporte une machine électrique entraînant les roues arrière du véhicule.

8. Véhicule automobile hybride selon la revendication 6 ou 7, **caractérisé en ce que** le calculateur propre de gestion (12) comporte des moyens engageant en cas de défaillance de la boîte de vitesses (4), le troisième rapport de cette boîte.

## Patentansprüche

1. Verfahren zur Verwaltung des Antriebsstrangs eines Hybridkraftfahrzeugs, das eine Brennkraftmaschine (2) umfasst, die die Antriebsräder (10) über ein Automatikgetriebe (4) antreibt, das über einen der Verwaltung eigenen Rechner (12) verfügt, der einen Notbetriebsmodus aufweist, der auf autonome Art im Fall von Versagen des Getriebes einen Gang einrückt, wobei dieser Antriebsstrang weiter einen Hilfsmotorisierung (14) umfasst, der an ein Energiespeichermittel angeschlossen ist, und einen Koordinationsrechner (20) der Baugruppe des Antriebsstrangs, der bei einem normalen Betriebsmodus die Auswahl der Gänge bestimmt, **dadurch gekennzeichnet, dass** er im Fall von Versagen des Schaltgetriebes (4) eine Neukonfiguration des Koordinationsrechners (20) ausführt, die systematisch das Stoppen der Brennkraftmaschine (2) steuert, falls die Geschwindigkeit des Fahrzeugs niedriger ist als ein maximaler Schwellenwert, und, falls das Schaltgetriebe in einem elektrisch neutralen Zustand ist, eine elektrische Steuerung seiner Reibungselemente umfasst, die eine offene kinematische Kette ergibt, indem eine Erzeugung von Hydraulikdruck, der für das Steuern dieser Elemente bestimmt ist, aufrechterhalten wird.

2. Verwaltungsverfahren nach Anspruch 1, **dadurch gekennzeichnet, dass** im Fall von Versagen des Schaltgetriebes (4) sein Verwaltungsrechner (12) einen Kommunikationsstrom ausgibt, der für den Koordinationsrechner (20) bestimmt ist, der dieses Versagen angibt.

3. Verwaltungsverfahren nach Anspruch 2, **dadurch gekennzeichnet, dass** der Kommunikationsstrom, der von dem Verwaltungsrechner (12) ausgegeben wird, ein binärer Strom ist.

4. Verwaltungsverfahren nach einem der vorstehenden Ansprüche, **dadurch gekennzeichnet, dass** der elektrisch neutrale Zustand des Schaltgetriebes (4) durch einen Strom von Informationen definiert ist, der von dem Koordinationsrechner (20) ausgegeben und für den Verwaltungsrechner des Schaltgetriebes (12) bestimmt ist, oder durch eine Information, die von diesem Verwaltungsrechner des Schaltgetriebes (12) kommt, die seinen neutralen elektrischen Zustand angibt, die für den Koordinationsrechner (20) bestimmt ist.

5. Verwaltungsverfahren nach einem der vorstehenden Ansprüche, **dadurch gekennzeichnet, dass**, wenn die Geschwindigkeit des Fahrzeugs größer ist als der maximale Schwellenwert, oder falls das Schaltgetriebe nicht in dem elektrisch neutralen Zustand ist, der Koordinationsrechner (20) eine Traktionsanfrage anlegt, die das Aufrechterhalten des Betriebs der Brennkraftmaschine (2) oder ihr Anlassen gestattet.

6. Hybridkraftfahrzeug, das eine Brennkraftmaschine (2) umfasst, die die Antriebsräder (10) über ein automatisches Schaltgetriebe (4) antreibt, das über einen der Verwaltung eigenen Rechner (12) verfügt, der einen Notbetriebsmodus aufweist, der auf autonome Art im Fall von Versagen des Schaltgetriebes einen Gang einlegt, wobei dieser Antriebsstrang weiter eine Hilfsmotorisierung (14) umfasst, die mit einem Energiespeichermittel verbunden ist, und einen Koordinationsrechner (20) der Baugruppe des Antriebsstrangs, der bei einem normalen Betriebsmodus die Auswahl der Gänge bestimmt, **dadurch gekennzeichnet, dass** er Mittel umfasst, die ein Verwaltungsverfahren des Antriebsstrangs umsetzen, das gemäß einem der vorstehenden Ansprüche ausgeführt wird.

7. Hybridkraftfahrzeug nach Anspruch 6, **dadurch gekennzeichnet, dass** die Hilfsmotorisierung (14) eine Elektromaschine umfasst, die die Hinterräder des Fahrzeugs antreibt.

8. Hybridkraftfahrzeug nach Anspruch 6 oder 7, **dadurch gekennzeichnet, dass** der der Verwaltung eigene Rechner (12) Mittel umfasst, die bei Versagen des Schaltgetriebes (4) den dritten Gang dieses Schaltgetriebes einrücken.

## Claims

1. A method for the management of the power train of a hybrid motor vehicle comprising a combustion engine (2) driving the drive wheels (10) by an automatic gearbox (4) having its own management computer (12), having an emergency mode that autonomously engages a gear ratio in the event of gearbox failure, this power train comprising in addition an auxiliary drive (14) connected to an energy storage means, and a computer (20) coordinating the whole of the power train which determines in a normal mode of operation the choice of gear ratios, **characterized in that** in the event of failure of the gearbox (4), it carries out a reconfiguration of the coordination computer (20) systematically commanding the switching off of the combustion engine (2) if the vehicle speed is lower than a maximum threshold, and if the gearbox is in a state of electrical neutral including an electrical command of its friction elements giving an open kinematic chain, maintaining a generation of hydraulic pressure intended for the commend of these elements.

2. The management method according to Claim 1, **characterized in that** in the event of failure of the gearbox (4), its management computer (12) emits a communication flow intended for the coordination computer (20), indicating this failure.

3. The management method according to Claim 2, **characterized in that** the communication flow emitted by the management computer (12) is a binary flow.

4. The management method according to any one of the preceding claims, **characterized in that** the electrical neutral state of the gearbox (4) is defined by a flow of data emitted by the coordination computer (20) and intended for the management computer of the gearbox (12), or by a data item coming from this management computer of the gearbox (12) indicating its electrical neutral state, intended for the coordination computer (20) .

5. The management method according to any one of the preceding claims, **characterized in that** if the speed of the vehicle is greater than the maximum threshold, or if the gearbox is not in the electrical neutral state, then the coordination computer (20) applies a traction request permitting the maintaining of the operation of the combustion engine (2) or its starting up.

6. A hybrid motor vehicle comprising a combustion engine (2) driving the drive wheels (10) by an automatic gearbox (4) having its own management computer (12), having an emergency mode that autonomously engages a gear ratio in the event of gearbox failure, this power train comprising in addition an auxiliary drive (14) connected to an energy storage means, and a computer (20) coordinating the whole of the power train which determines in a normal operating mode the choice of gear ratios, **characterized in that** it comprises means implementing a management method of the power train realized according to any one of the preceding claims.

7. The hybrid motor vehicle according to Claim 6, **characterized in that** the auxiliary drive (14) comprises an electric machine driving the rear wheels of the vehicle.

8. The hybrid motor vehicle according to Claim 6 or 7, **characterized in that** the specific management computer (12) comprises means engaging, in the event of failure of the gearbox (4), the third ratio of this box.
